# EUROPÄISCHE PATENTANMELDUNG

(11) **EP 3 547 505 A1**
(43) Veröffentlichungstag der Anmeldung: **02.10.2019**
(21) Anmeldenummer: 18164331.3
(22) Anmeldetag: 27.03.2018
(51) Int. Cl.: H02K 3/28, H02J 3/38, H02K 7/18

(54) **KOMBINATION EINER ELEKTRISCHEN DREHSTROMMASCHINE MIT EINER UMRICHTEREINHEIT UND WINDKRAFTANLAGE**

(71) Anmelder: Siemens Aktiengesellschaft, 80333 München (DE)
(72) Erfinder: Die Erfindernennung liegt noch nicht vor

(57) **Zusammenfassung**

Eine Drehstrommaschine (3) weist einen Stator (11) und einen um eine Rotationsachse (10) rotierbaren Rotor (8) auf. Der Stator (11) ist mechanisch in Statorsegmente (14) aufgeteilt, die, bezogen auf die Rotationsachse (10), jeweils einen jeweiligen Sektor überdecken. In den Statorsegmenten (14) sind jeweils die Spulen (12) nur eines einzelnen mehrphasigen Drehstromsystems angeordnet. Die Statorsegmente (14) weisen jeweils auch nur die Anschlüsse (15) zum Anschließen der Phasenleitungen (16) eines einzelnen mehrphasigen Drehstromsystems auf. Die Anschlüsse (15) sind mit den Spulen (12) verbunden. Die Umrichtereinheit (4) weist mehrere unabhängig voneinander betreibbare Teileinheiten (4a,4b) auf, die jeweils ein einzelnes mehrphasiges Drehstromsystem bilden. Die Anzahlen an Phasen der Teileinheiten (4a,4b) und der Statorsegmente (14) stimmen überein. Die Anschlüsse (15) der Statorsegmente (14) sind jeweils mit einer Teileinheit (4a,4b) verbunden. Die Statorsegmente (14) bilden Gruppen von um die Rotationsachse (10) gesehen unmittelbar aufeinander folgenden Statorsegmenten (14). Die Anschlüsse (15) der Statorsegmente (14) sind innerhalb der jeweiligen Gruppe mit derselben Teileinheit (4a,4b) verbunden, von Gruppe von Statorsegmenten (14) zu Gruppe von Statorsegmenten (14) jedoch mit verschiedenen Teileinheiten (4a,4b) verbunden.

## Beschreibung

Die vorliegende Erfindung geht aus von einer Kombination einer elektrischen Drehstrommaschine mit einer Umrichtereinheit,
- wobei die Drehstrommaschine einen Stator und einen Rotor aufweist,
- wobei der Rotor um eine Rotationsachse rotierbar ist,
- wobei der Stator mechanisch in eine Anzahl von Statorsegmenten aufgeteilt ist, die, bezogen auf die Rotationsachse, jeweils einen jeweiligen Sektor überdecken,
- wobei in den Statorsegmenten jeweils die Spulen nur eines einzelnen mehrphasigen Drehstromsystems angeordnet sind,
- wobei die Statorsegmente jeweils auch nur die Anschlüsse zum Anschließen der Phasenleitungen eines einzelnen mehrphasigen Drehstromsystems aufweisen und
- wobei die Anschlüsse mit den Spulen der Phasen verbunden sind,
- wobei die Umrichtereinheit mehrere Teileinheiten aufweist,
- wobei die Teileinheiten unabhängig voneinander betreibbar sind und jeweils ein einzelnes mehrphasiges Drehstromsystem bilden,
- wobei die Anzahl an Phasen der Teileinheiten mit der Anzahl an Phasen der Statorsegmente übereinstimmt und
- wobei die Anschlüsse der Statorsegmente der Drehstrommaschine jeweils mit einer der Teileinheiten der Umrichtereinheit verbunden sind.

Die vorliegende Erfindung geht weiterhin aus von einer Windkraftanlage,
- wobei die Windkraftanlage eine Windturbine und eine derartige Kombination aufweist,
- wobei die Windturbine den Rotor der elektrischen Drehstrommaschine der Kombination antreibt.

Elektrische Drehstrommaschinen werden üblicherweise über Umrichtereinheiten betrieben. Dies gilt gleichermaßen für elektrische Motoren und elektrische Generatoren.

Bei kleineren elektrischen Drehstrommaschinen besteht der Stator aus einer kreisförmig geschlossenen Einheit. Bei größeren elektrischen Drehstrommaschinen erweist sich dies oftmals als nicht praktikabel. In diesem Fall ist der Stator mechanisch in eine Anzahl von identischen Statorsegmenten aufgeteilt ist, die, bezogen auf die Rotationsachse, jeweils einen jeweiligen Sektor überdecken.

Üblicherweise sind in den Statorsegmenten jeweils die Spulen nur eines einzelnen mehrphasigen Drehstromsystems angeordnet. Demzufolge weisen die Statorsegmente jeweils auch nur die Anschlüsse zum Anschließen der Phasenleitungen eines einzelnen mehrphasigen Drehstromsystems auf. Die Anschlüsse sind mit den Spulen der Phasen verbunden.

Bei sehr großen elektrischen Drehstrommaschinen - in der Regel die Leistungsklasse von 1 MW und mehr - werden die Umrichtereinheiten oftmals in mehrere Teileinheiten aufgeteilt, meist zwei Teileinheiten, manchmal auch noch mehr Teileinheiten. Die Teileinheiten sind in diesem Fall unabhängig voneinander betreibbar und bilden jeweils ein einzelnes mehrphasiges Drehstromsystem. In den Statorsegmenten sind in diesem Fall die Spulen mehrerer mehrphasiger Drehstromsysteme angeordnet, in der Regel für jede Teileinheit jeweils ein Wicklungssystem. Auch weisen die Statorsegmente in diesem Fall die Anschlüsse zum Anschließen der Phasenleitungen mehrerer mehrphasiger Drehstromsysteme auf, nämlich für jedes Wicklungssystem jeweils die erforderlichen Anschlüsse. Die Anzahl an Phasen der Teileinheiten stimmt mit der Anzahl an Phasen der Wicklungssysteme der Statorsegmente überein. Die Anschlüsse der Statorsegmente der Drehstrommaschine sind mit den Teileinheiten verbunden. Jedes Statorsegment ist hierbei mit mehreren - mindestens zwei - Teileinheiten verbunden.

Zum Herstellen der erforderlichen Verbindungen der Teileinheiten der Umrichtereinheit mit den Anschlüssen der Statorsegmente sind im Stand der Technik Ringleitungen vorgesehen, welche um die Rotationsachse umlaufen. Die Ringleitungen sind teuer. Weiterhin bewirken sie eine axiale Verlängerung der Drehstrommaschine. Weiterhin ergibt sich ein hoher Aufwand für die Erstellung und Isolierung der Ringleitungen und sonstiger stromleitender bzw. spannungführender Elemente voneinander.

Das Vorsehen von mehreren Teileinheiten in der Umrichtereinheit und hiermit korrespondierend das Vorsehen der Spulen mehrerer mehrphasiger Drehstromsysteme in den Statorsegmenten hat den Zweck, bei einem Ausfall einer der Teileinheiten einen Notbetrieb der aus der elektrischen Drehstrommaschine und der zugehörigen Umrichtereinheit bestehenden Kombination aufrecht erhalten zu können. Durch die in diesem Fall nicht mehr gleichmäßige Ausbildung des Drehfeldes der Drehstrommaschine treten jedoch im Rotor der Drehstrommaschine hohe Wirbelstromverluste auf.

Die Aufgabe der vorliegenden Erfindung besteht darin, insbesondere die bei einem Ausfall einer der Teileinheiten im Rotor auftretenden Wirbelstromverluste zu reduzieren. Nach Möglichkeit soll zusätzlich auch der Aufwand für die Ringleitungen reduziert werden.

Die Aufgabe wird durch eine Kombination einer elektrischen Drehstrommaschine mit einer Umrichtereinheit mit den Merkmalen des Anspruchs 1 gelöst. Vorteilhafte Ausgestaltungen der Kombination sind Gegenstand der abhängigen Ansprüche 2 bis 12.

Erfindungsgemäß wird eine Kombination der eingangs genannten Art dadurch ausgestaltet,
- dass die Statorsegmente Gruppen von um die Rotationsachse gesehen unmittelbar aufeinander folgenden Statorsegmenten bilden,
- dass die Anschlüsse der Statorsegmente innerhalb der jeweiligen Gruppe mit derselben Teileinheit der Umrichtereinheit verbunden sind und
- dass die Anschlüsse der Statorsegmente von um die Rotationsachse gesehen aufeinanderfolgenden Gruppen von Statorsegmenten mit voneinander verschiedenen Teileinheiten der Umrichtereinheit verbunden sind.

Durch diese Ausgestaltung können die bei einem Ausfall einer der Teileinheiten im Rotor auftretenden Wirbelstromverluste deutlich reduziert werden. Die Reduktion ist umso größer, je größere Gruppen von Statorsegmenten gebildet werden.

Im Minimalfall sind die Anschlüsse des jeweiligen Statorsegments jeweils nur mit einer einzigen auf dem jeweiligen Statorsegment angeordneten Gruppe von um die Rotationsachse gesehen unmittelbar aufeinanderfolgenden Spulen verbunden. Vorzugsweise sind die Anschlüsse des jeweiligen Statorsegments jedoch jeweils mit mehreren auf dem jeweiligen Statorsegment angeordneten Gruppen von um die Rotationsachse gesehen unmittelbar aufeinanderfolgenden Spulen verbunden. In diesem Fall ist zwischen je zwei Gruppen von um die Rotationsachse gesehen unmittelbar aufeinanderfolgenden Spulen einer der Phasen je eine Gruppen von um die Rotationsachse gesehen unmittelbar aufeinanderfolgenden Spulen je einer der anderen Phasen angeordnet.

Die Anzahl an Spulen pro Spulengruppe kann nach Bedarf bestimmt sein. Sie kann eins betragen, kann aber auch größer als eins sein.

Im Minimalfall bestehen die Gruppen von Statorsegmenten jeweils nur aus einem einzelnen Statorsegment. Vorzugsweise aber bestehen die Gruppen von Statorsegmenten aus jeweils mehreren Statorsegmenten.

Es ist möglich, die Statorsegmente einzeln über entsprechende Verbindungskabel mit den Teileinheiten der Umrichtereinheit zu verbinden. In einer bevorzugten Ausgestaltung weist der Stator jedoch Teil-Ringleitungen auf, die sich um die Rotationsachse gesehen über einen Teilumfang erstrecken und die jeweils mit den Anschlüssen der Statorsegmente einer einzelnen Gruppe von Statorsegmenten verbunden sind. Die jeweilige Teil-Ringleitung erstreckt sich somit im wesentlichen über den selben Winkelbereich wie die jeweilige Gruppe von Statorsegmenten. Die Spulen der Segmente bilden die auf dem jeweiligen Segment angeordneten Wicklungen. Zum Verbinden der Wicklungen der Statorsegmente der jeweiligen Gruppe mit einer der Teileinheiten der Umrichtereinheit ist jedoch nur noch ein einziges Verbindungskabel erforderlich. Die Anzahl an Verbindungskabeln und der hiermit verbundene Montageaufwand können somit deutlich reduziert werden. Da sich weiterhin die Teil-Ringleitungen nur über einen Teilumfang erstrecken, können sowohl die axiale Ausdehnung der Drehstrommaschine gering gehalten werden als auch der Aufwand für die Ringleitungen reduziert werden.

Vorzugsweise weisen die Teil-Ringleitungen pro Phase je einen weiteren Anschluss zum Anschließen der jeweiligen Teil-Ringleitung an eine der Teileinheiten der Umrichtereinheit auf. Dadurch ist ein Anschluss außerhalb der beengten Verhältnisse der Statorsegmente möglich.

Die Größe der Gruppen von Statorsegmenten wird am einfachsten durch den auf die Rotationsachse bezogenen Winkelbereich charakterisiert, den die Gruppen von Statorsegmenten jeweils überdecken. Der Winkelbereich kann bis zu 360°/n betragen, wobei n gleich der Anzahl an mit den Wicklungen der Drehstrommaschine verbundenen Teileinheiten ist oder ein ganzzahliges Vielfaches der Anzahl an mit den Wicklungen der Drehstrommaschine verbundenen Teileinheiten ist. Bei - rein beispielhaft - zwei derartigen Teileinheiten kann der Winkelbereich also 180°, 90°, 60°, 45° usw. sein. Bei drei derartigen Teileinheiten kann der Winkelbereich 120°, 60°, 40°, 30° usw. sein.

In einer möglichen Ausgestaltung der vorliegenden Erfindung wird der Winkelbereich so groß wie möglich gewählt. In diesem Fall ist also die Anzahl an Gruppen von Statorsegmenten gleich der Anzahl an mit den Wicklungen der Drehstrommaschine verbundenen Teileinheiten der Umrichtereinheit. Diese Ausgestaltung hat den Vorteil, dass die Wirbelstromverluste, die bei einem Ausfall einer der Teileinheiten im Rotor auftreten, so klein wie möglich sind.

Wenn im Rahmen der zuletzt erläuterten Ausgestaltung eine der Teileinheiten der Umrichtereinheit ausfällt, hat dies zur Folge, dass nur noch die auf einem Teilkreis um die Rotationsachse herum angeordneten Wicklungen bestromt werden. Dadurch ergibt sich eine zusätzliche, radial gerichtete Kraft auf den Rotor. Diese Kraft wirkt - insbesondere in der Lagerung des Rotors - zusätzlich zur Gewichtskraft des Rotors. Je nachdem, wie die Gruppen von Statorsegmenten angeordnet sind und welche der Teileinheiten ausfällt, kann die zusätzliche Kraft mit der Gewichtskraft des Rotors oder gegen die Gewichtskraft des Rotors auf die Lagerung des Rotors wirken. Vorzugsweise weist die Umrichtereinheit daher eine zwischen den Teileinheiten und den Wicklungen der Drehstrommaschine angeordnete Schalteinrichtung auf, über welche einstellbar ist, welche der Teileinheiten der Umrichtereinheit mit den Spulen von welchen Gruppen von Statorsegmenten verbunden ist. Dadurch kann bei einem Ausfall einer Teileinheit die Schalteinrichtung derart angesteuert werden, dass die zusätzliche Kraft die durch die Gewichtskraft des Rotors auf die Lagerung des Rotors ausgeübte Kraft verringert.

In einer anderen, besonders bevorzugten Ausgestaltung der vorliegenden Erfindung wird der Winkelbereich nur halb so groß wie möglich gewählt. In diesem Fall ist also die Anzahl an Gruppen von Statorsegmenten gleich dem Doppelten der Anzahl an mit den Wicklungen der Drehstrommaschine verbundenen Teileinheiten der Umrichtereinheit. Die Wicklungen der Statorsegmente der Gruppen von Statorsegmenten, die jeweils mit der gleichen Teileinheit der Umrichtereinheit verbunden sind, liegen in diesem Fall einander bezüglich der Rotationsachse gegenüber. Durch diese Ausgestaltung kann erreicht werden, dass auch beim Ausfall einer Teileinheit der Umrichtereinheit keinerlei zusätzliche radial gerichtete Kräfte auf den Rotor wirken. Die Wirbelstromverluste, die bei einem Ausfall einer der Teileinheiten im Rotor auftreten, sind jedoch geringfügig höher.

Die Drehstrommaschine kann als übliche Innenläufermaschine ausgebildet sein. Vorzugsweise ist der Rotor jedoch als Außenläufer ausgebildet.

Je nach Ausführung der dynamoelektrischen Maschine(Drehstrommaschine) als Innenläufer oder als Außenläufer werden die Teileinheiten um den Stator und/oder in axialer Verlängerung des Stators und/oder im Stator angeordnet. Diese Positionierung hängt von den Örtlichkeiten und der Ausführung der dynamoelektrischen Maschine(Drehstrommaschine), insbesondere des Generators, ab.

Die Anzahl an Phasen der Drehstromsysteme beträgt - wie allgemein üblich - vorzugsweise drei.

Die Aufgabe wird weiterhin durch eine Windkraftanlage mit den Merkmalen des Anspruchs 13 gelöst. Erfindungsgemäß ist bei einer Windkraftanlage der eingangs genannten Art die Kombination als erfindungsgemäße Kombination ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Windkraftanlage,
- FIG 2: einen Teil der Windkraftanlage,
- FIG 3: einen Stator und eine Umrichtereinheit,
- FIG 4: einen Stator und eine Umrichtereinheit,
- FIG 5: eine perspektivische Darstellung eines Statorsegments,
- FIG 6: eine Umrichtereinheit, eine Schalteinrichtung und einen Stator in einem ersten Schaltzustand der Schalteinrichtung,
- FIG 7: die Ausgestaltung von FIG 7 in einem zweiten Schaltzustand der Schalteinrichtung und
- FIG 8: die Ausgestaltung von FIG 7 in einem dritten Schaltzustand der Schalteinrichtung.

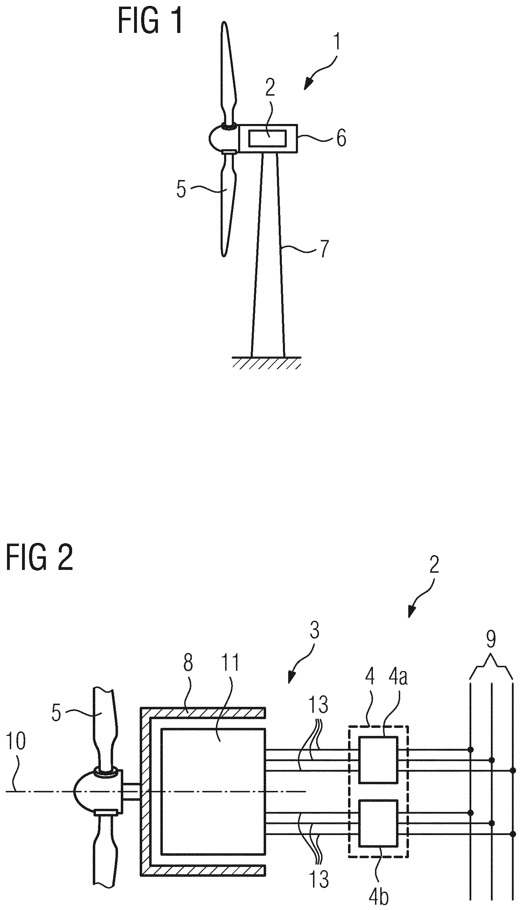

Gemäß den FIG 1 und 2 weist eine Windkraftanlage eine Turbine-Generator-Kombination 1 auf. Die Turbine-Generator-Kombination 1 weist einerseits eine Kombination 2 einer elektrischen Drehstrommaschine 3 mit einer Umrichtereinheit 4 und andererseits eine Windturbine 5 auf. Die Kombination 2 ist in der Regel in einer Gondel 6 angeordnet, die ihrerseits am oberen Ende eines Turms 7 der Windkraftanlage angeordnet ist. Die Windturbine 5 ist außerhalb der Gondel 6 angeordnet. Die Windturbine 5 treibt einen Rotor 8 der elektrischen Drehstrommaschine 3 an.

Die Windturbine 5 kann direkt und unmittelbar auf den Rotor 8 wirken. In diesem Fall stimmt eine Drehzahl des Rotors 8 mit einer Drehzahl der Windturbine 5 überein. Alternativ kann die Windturbine 5 über ein Getriebe auf den Rotor 8 wirken. In diesem Fall korrespondieren die Drehzahl des Rotors 8 und die Drehzahl der Windturbine 5 mit einer Übersetzung des Getriebes. Über die Umrichtereinheit 4 speist die Windkraftanlage elektrischen Strom in ein Versorgungsnetz 9 ein.

Der Rotor 8 ist entsprechend der Darstellung in FIG 2 als Außenläufer ausgebildet. Er könnte jedoch auch als Innenläufer ausgebildet sein. Unabhängig von der Ausbildung als Außenläufer oder als Innenläufer ist der Rotor 8 um eine Rotationsachse 10 rotierbar.

Soweit nachfolgend die Begriffe "axial", "radial" und "tangential" verwendet werden, sind sie stets auf die Rotationsachse 10 bezogen. "Axial" ist eine Richtung parallel zur Rotationsachse 10. "Radial" ist eine Richtung orthogonal zur Rotationsachse 10 direkt auf die Rotationsachse 10 zu bzw. von ihr weg. "Tangential" ist eine Richtung, die sowohl orthogonal zur Axialrichtung als auch orthogonal zur Radialrichtung gerichtet ist. "Tangential" ist also eine Richtung, die bei einer konstanten Axialposition und in einem konstanten radialen Abstand kreisförmig um die Rotationsachse 10 herum gerichtet ist.

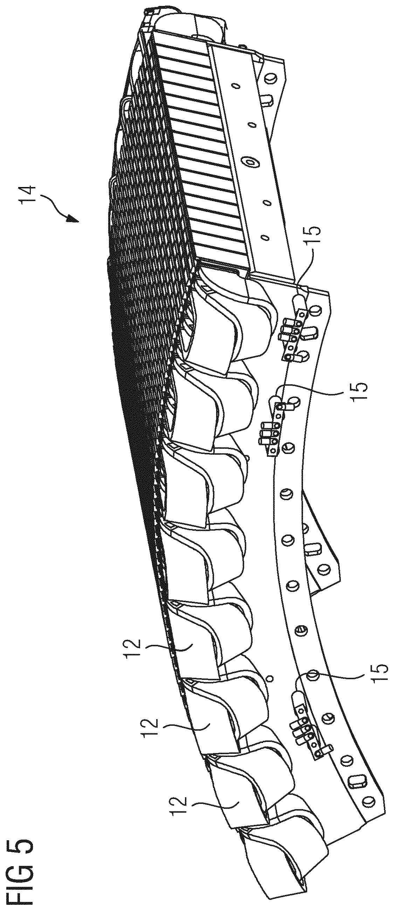

Die Drehstrommaschine 3 weist zusätzlich zum Rotor 8 einen Stator 11 auf. Der mechanische Aufbau des Stators 11 und die elektrische Verschaltung von im Stator 11 angeordneten Spulen 12 (siehe FIG 5) mit der Umrichtereinheit 4 sind der Kerngegenstand der vorliegenden Erfindung.

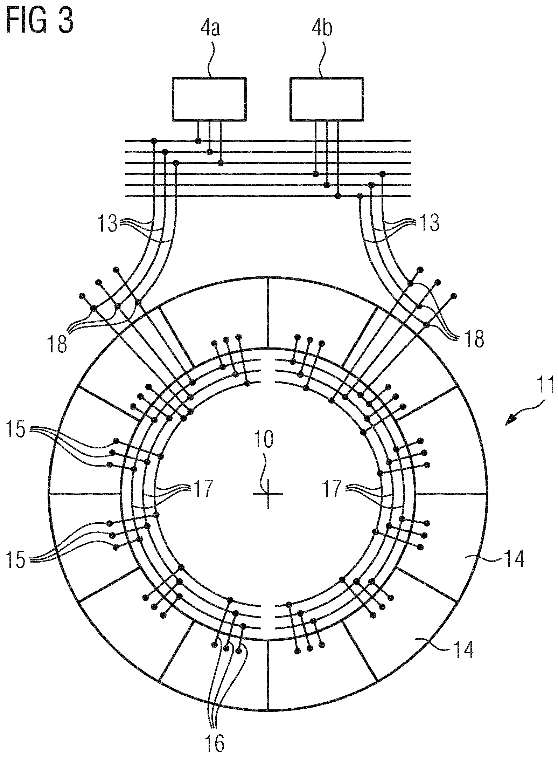

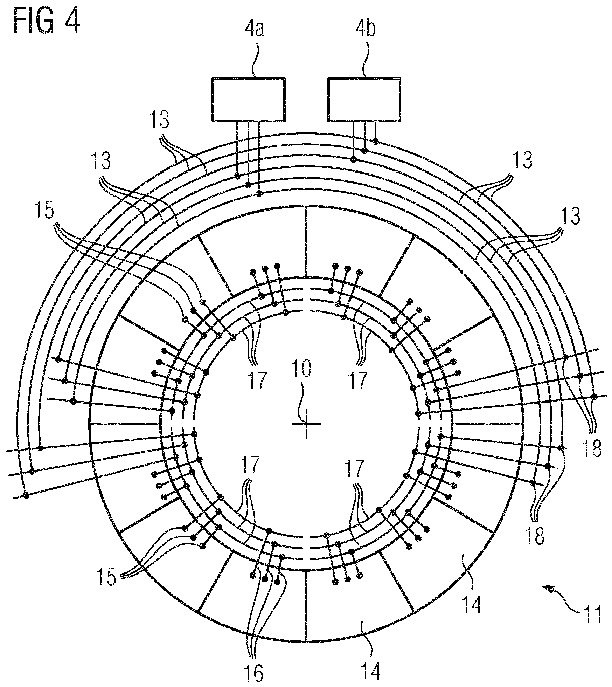

Wie bereits aus FIG 2 erkennbar ist und noch deutlicher in den FIG 3 und 4 dargestellt ist, weist die Umrichtereinheit 4 mehrere Teileinheiten 4a, 4b auf. In den FIG 2, 3 und 4 ist die Minimalanzahl (zwei Teileinheiten 4a, 4b) dargestellt. In Verbindung mit der minimalen Anzahl an Teileinheiten 4a, 4b wird die nachfolgende Erfindung auch erläutert. Prinzipiell könnten jedoch auch mehr als zwei Teileinheiten 4a, 4b vorhanden sein.

Die Teileinheiten 4a, 4b sind unabhängig voneinander betreibbar. Insbesondere kann jede Teileinheit 4a, 4b sowohl zusammen mit der anderen Teileinheit 4b, 4a (bzw. im Falle von mehr als zwei Teileinheiten 4a, 4b zusammen mit den anderen Teileinheiten 4a, 4b) als auch ohne die andere Teileinheit 4b (bzw. im Falle von mehr als zwei Teileinheiten 4a, 4b ohne die anderen Teileinheiten 4a, 4b oder nur zusammen mit einem Teil der anderen Teileinheiten 4a, 4b) betrieben werden. Im Normalbetrieb der Umrichtereinheit 4 werden die Teileinheiten 4a, 4b zusammen betrieben. Bei einem Ausfall einer der Teileinheiten 4a, 4b können jedoch die nicht ausgefallenen Teileinheiten 4b, 4a weiterhin betrieben werden.

Die Teileinheiten 4a, 4b bilden, soweit es ihre Anschaltung an den Stator 11 der Drehstrommaschine 3 betrifft, jeweils ein einzelnes mehrphasiges Drehstromsystem. Die Anzahl an Phasen beträgt mindestens drei. In aller Regel sind auch nicht mehr als drei Phasen vorhanden. Dieser Fall ist in den FIG 2, 3 und 4 dargestellt, weil jeweils drei Verbindungsleitungen 13 zwischen den Teileinheiten 4a, 4b und dem Stator 11 eingezeichnet sind.

Der Stator 11 ist entsprechend der Darstellung in den FIG 3 und 4 mechanisch in eine Anzahl von Statorsegmenten 14 aufgeteilt. Sie Statorsegmente 14 sind - zumindest in der Regel - baugleich. In den FIG 3 und 4 sind nur einige der Statorsegmente 14 mit ihrem Bezugszeichen versehen, um die FIG 3 und 4 nicht zu überfrachten. Die Statorsegmente 14 überdecken, bezogen auf die Rotationsachse 10, jeweils einen jeweiligen Sektor. Gemäß den FIG 3 und 4 sind je zwölf Statorsegmente 14 vorhanden, so dass jedes Statorsegment 14 einen Sektor von 30° überdeckt. Die Anzahl an Statorsegmenten 14 könnte aber auch größer oder kleiner sein.

In FIG 5 ist - stellvertretend für alle Statorsegmente 14 - eines der Statorsegmente 14 dargestellt. Auf den Statorsegmenten 14 sind entsprechend der Darstellung in FIG 5 jeweils die Spulen 12 eines mehrphasigen Drehstromsystems angeordnet. Die Spulen 12 gehören hierbei zu einem einzigen mehrphasigen Drehstromsystem. Unabhängig von der Anzahl an auf dem jeweiligen Statorsegment 14 angeordneten Spulen 12 ist die Anzahl an auf dem jeweiligen Statorsegment 14 angeordneten Spulen 12 ein ganzzahliges Vielfaches der Anzahl an Phasen. Auf dem jeweiligen Statorsegment 14 sind also - bei drei Phasen - minimal sechs Spulen 12 angeordnet. Die zur gleichen Phase gehörigen Spulen 12 sind einander parallel geschaltet. Im Falle der - rein beispielhaften - Darstellung von FIG 5 sind auf dem dort dargestellten Statorsegment 14 insgesamt neun Spulen 12 je Phase angeordnet. Aufgrund des Umstands, dass das Drehstromsystem im vorliegenden Fall dreiphasig ausgebildet ist, sind somit insgesamt 27 Spulen 12 vorhanden.

Das Statorsegment 14 weist entsprechend der Darstellung in den FIG 3, 4 und 5 Anschlüsse 15 zum Anschließen der Phasenleitungen 16 eines einzelnen mehrphasigen Drehstromsystems auf. In den FIG 3 und 4 sind nur einige der Anschlüsse 15 und der Phasenleitungen 16 mit ihrem Bezugszeichen versehen, um die FIG 3 und 4 nicht zu überfrachten. In FIG 5 sind bei den Anschlüssen 15 je drei Abgänge nach oben und ein Abgang nach unten angedeutet. An die Abgänge nach oben sind die Spulen 12 angeschlossen, an den Abgang nach unten die jeweilige Phasenleitung 16. Die Anschlüsse 15 können als Schraubanschlüsse ausgebildet sein. Dies ist aber nicht zwingend erforderlich. Bei den Phasenleitungen 16 kann es sich insbesondere um die Verbindungsleitungen 13 handeln. Es kann sich jedoch auch um von den Verbindungsleitungen 13 verschiedene Leitungen handeln. Dies wird aus späteren Ausführungen noch ersichtlich werden.

Die Anzahl an Anschlüssen 15 auf dem jeweiligen Statorsegment 14 entspricht der Anzahl an Phasen des Drehstromsystems der Teileinheiten 4a, 4b. Die Anschlüsse 15 sind mit den einander parallel geschalteten Wicklungen der Phasen verbunden. Insbesondere stimmt somit die Anzahl an Phasen der Teileinheiten 4a, 4b mit der Anzahl an Phasen der Statorsegmente 14 überein. Unabhängig davon, ob es sich bei den Phasenleitungen 16 um die Verbindungsleitungen 13 oder um andere Leitungen handelt, sind die Anschlüsse 15 der Statorsegmente 14 der Drehstrommaschine 3 jeweils mit einer der Teileinheiten 4a, 4b verbunden. Die Anschlüsse 15 sind hingegen nicht mit mehreren der Teileinheiten 4a, 4b verbunden. Es ist zwar möglich, dass die Anschlüsse 15 an mehrere der Teileinheiten 4a, 4b angeschaltet werden können. In diesem Fall ist das Anschalten der Anschlüsse an die Teileinheiten 4a, 4b jedoch gegeneinander verriegelt. Wenn also zu einem beliebigen Zeitpunkt bestimmte Anschlüsse 15 an die Teileinheit 4a angeschaltet sind, können dieselben Anschlüsse 15 zu diesem Zeitpunkt nicht an die Teileinheit 4b (oder allgemein eine andere Teileinheit 4b als die Teileinheit 4a) angeschaltet sein.

Weitere mit Wicklungen des Stators 11 verbundene Anschlüsse weist das Statorsegment 14 nicht auf. Das Statorsegment 14 weist also nur die Anschlüsse 15 für ein einzelnes Drehstromsystem auf.

Es ist möglich, die insgesamt 27 Spulen 12 des in FIG 5 dargestellten Statorsegments 14 auf dem Statorsegment 14 in der Abfolge a-...-a-b-...-b-c-...-c anzuordnen. In diesem Fall sind die Anschlüsse 15 des jeweiligen Statorsegments 14 jeweils mit einer auf dem jeweiligen Statorsegment 14 angeordneten Gruppe von Spulen 12 verbunden, wobei die Spulen 12 der jeweiligen Gruppe in Tangentialrichtung unmittelbar aufeinander folgen. Die Anzahl an Spulen 12 pro Gruppe von Spulen 12 wäre in diesem Fall neun. Eine analoge Ausgestaltung (a-a-b-b-c-c) ist auch bei anderen Anzahlen, z. B. insgesamt nur sechs Spulen 12 denkbar.

Alternativ ist es möglich, die insgesamt 27 Spulen 12 des in FIG 5 dargestellten Statorsegments 14 auf dem Statorsegment 14 in der Abfolge a-b-c-a-b-c-...-a-b-c anzuordnen. In diesem Fall sind die Anschlüsse 15 des jeweiligen Statorsegments 14 jeweils mit mehreren auf dem jeweiligen Statorsegment 14 angeordneten Gruppen von Spulen 12 verbunden, wobei die Spulen 12 der jeweiligen Gruppe in Tangentialrichtung unmittelbar aufeinander folgen. Die Anzahl an Spulen 12 pro Gruppe von Spulen 12 beträgt in diesem Fall eins (entarteter Fall).

Auch können die Spulen 12 auf dem Statorsegment 14 beispielsweise in der Abfolge a-a-a-b-b-b-c-c-c-a-a-a-...-c-c-c angeordnet sein. In diesem Fall wären die Anschlüsse 15 des jeweiligen Statorsegments 14 ebenfalls jeweils mit mehreren auf dem jeweiligen Statorsegment 14 angeordneten Gruppen von Spulen 12 verbunden, wobei die Spulen 12 der jeweiligen Gruppe in Tangentialrichtung unmittelbar aufeinander folgen. Die Anzahl an Spulen 12 pro Gruppe von Spulen 12 wäre in diesem Fall jedoch größer als eins (nicht entarteter Fall). Ähnliche Ausgestaltungen sind auch möglich, wenn auf dem Statorsegment 14 eine andere geeignete Anzahl an Spulen 12 angeordnet wäre, beispielsweise 18 Spulen 12 oder 24 Spulen 12.

In beiden Fällen - also sowohl im entarteten Fall als auch im nicht entarteten Fall - ist zwischen je zwei Gruppen von tangential unmittelbar aufeinanderfolgenden Spulen 12 einer der Phasen je eine Gruppe von tangential unmittelbar aufeinanderfolgenden Spulen 12 je einer der anderen Phasen angeordnet.

Die Statorsegmente 14 bilden entsprechend der Darstellung in den FIG 3 und 4 Gruppen von tangential unmittelbar aufeinander folgenden Statorsegmenten 14. Innerhalb der jeweiligen Gruppe von Statorsegmenten 14 sind die Anschlüsse 15 der Statorsegmente 14 mit derselben Teileinheit 4a, 4b der Umrichtereinheit 4 verbunden. Die Anschlüsse 15 der Statorsegmente 14 von tangential aufeinanderfolgenden Gruppen von Statorsegmenten 14 sind hingegen mit voneinander verschiedenen Teileinheiten 4a, 4b der Umrichtereinheit 4 verbunden.

Analog zur Gruppenbildung der Spulen 12 auf den Statorsegmenten 14 können die Gruppen von Statorsegmenten 14 aus jeweils einem einzelnen Statorsegment 14 bestehen. Entsprechend der Darstellung in den FIG 3 und 4 bestehen die Gruppen von Statorsegmenten 14 jedoch aus jeweils mehreren Statorsegmenten 14.

Insbesondere erstrecken sich die Gruppen sich die Gruppen von Statorsegmenten 14 in der Regel jeweils über 360°/n. n ist ein ganzzahliges Vielfaches der Anzahl an Teileinheiten 4a, 4b. In der Ausgestaltung gemäß FIG 3 erstrecken sich die Gruppen von Statorsegmenten 14 über 180°, in der Ausgestaltung gemäß FIG 4 über 90°. In der Ausgestaltung gemäß FIG 3 ist also die Anzahl an Gruppen von Statorsegmenten 14 gleich der Anzahl an mit den Spulen 12 der Drehstrommaschine 3 verbundenen Teileinheiten 4a, 4b der Umrichtereinheit 4. In der Ausgestaltung gemäß FIG 4 ist die Anzahl an Gruppen von Statorsegmenten 14 gleich dem Doppelten der Anzahl an mit den Spulen 12 der Drehstrommaschine 3 verbundenen Teileinheiten 4a, 4b der Umrichtereinheit 4.

Es ist möglich, ausgehend von den Teileinheiten 4a, 4b jeweilige Verbindungsleitungen 13 direkt zu den Anschlüssen 15 der Statorsegmente 14 zu legen. Vorzugsweise weist der Stator 11 jedoch entsprechend der Darstellung in den FIG 3 und 4 Teil-Ringleitungen 17 auf. Die Teil-Ringleitungen 17 erstrecken sich tangential jeweils über einen Teilumfang. Der Teilumfang verläuft im gleichen Winkelbereich wie die jeweilige Gruppe von Statorsegmenten 14. Die Erstreckung der Teil-Ringleitungen 17 kann (geringfügig) größer als der Winkelbereich sein, über den sich die Gruppen von Statorsegmenten 14 jeweils erstrecken. Alternativ kann er ebenso groß und vor allem (in der Regel geringfügig) kleiner als dieser Winkelbereich sein. In jedem Fall aber müssen sich die Teil-Ringleitungen 17, sofern sie vorhanden sind, soweit in Tangentialrichtung erstrecken, dass an die Teil-Ringleitungen 17 die Phasenleitungen 16 zu den Anschlüssen 15 der Statorsegmente 14 einer (1) Gruppe von Statorsegmenten 14 angeschlossen werden können.

Es ist möglich, dass die Anschlüsse 15 der Statorsegmente 14 derart ausgebildet sind, dass an die Anschlüsse 15 sowohl über die Phasenleitungen 16 die Teil-Ringleitungen 17 als auch zusätzlich die Verbindungsleitungen 13 angeschlossen werden können. In diesem Fall werden an die Anschlüsse 15 eines (1) Statorsegments 14 zusätzlich zu den Phasenleitungen 16 auch die Verbindungsleitungen 13 angeschlossen. Dieses eine (1) Statorsegment 14 der jeweiligen Gruppe von Statorsegmenten 14 wird in diesem Fall direkt über die Verbindungsleitungen 13 mit der entsprechenden Teileinheit 4a, 4b der Umrichtereinheit 4 verbunden. Die anderen Statorsegmente 14 der jeweiligen Gruppe von Statorsegmenten 14 sind in diesem Fall indirekt über die Phasenleitungen 16 dieses einen Statorsegments zu den zugehörigen Teil-Ringleitungen 17 und die Phasenleitungen 16 der anderen Statorsegmente 14 der jeweiligen Gruppe mit der entsprechenden Teileinheit 4a, 4b der Umrichtereinheit 4 verbunden.

Entsprechend der Darstellung in den FIG 3 und 4 weisen die Teil-Ringleitungen 17 pro Phase jedoch je einen weiteren Anschluss 18 auf. An die weiteren Anschlüsse 18 werden in diesem Fall die Verbindungsleitungen 13 angeschlossen. In den FIG 3 und 4 sind nur einige der weiteren Anschlüsse 18 mit ihrem Bezugszeichen versehen, um die FIG 3 und 4 nicht zu überfrachten. Wenn die weiteren Anschlüsse 18 vorhanden sind, sind alle Statorsegmente 14 der jeweiligen Gruppe von Statorsegmenten 14 über ihre Phasenleitungen 16 und die Teil-Ringleitungen 17 mit der entsprechenden Teileinheit 4a, 4b der Umrichtereinheit 4 verbunden.

Im Falle der Ausgestaltung gemäß FIG 4 liegen die Spulen 12 der Statorsegmente 14 der Gruppen von Statorsegmenten 14, die jeweils mit der gleichen Teileinheit 4a, 4b der Umrichtereinheit 4 verbunden sind, einander tangential gegenüber. Nicht nur im Normalbetrieb, in dem alle Teileinheiten 4a, 4b arbeiten, sondern auch bei Ausfall einer der Teileinheiten 4a, 4b, wenn also nur noch die anderen der Teileinheiten 4a, 4b arbeiten, wird die Drehstrommaschine 3 somit symmetrisch betrieben. Dies bewirkt einen Ausgleich der Kräfte, die in Radialrichtung auf den Rotor 8 wirken. Bei der Ausgestaltung gemäß FIG 3 wirkt bei Ausfall einer der Teileinheiten 4a, 4b in Radialrichtung jedoch eine resultierende Kraft auf den Rotor 8. Die Richtung dieser Kraft - nach oben, nach unten, nach links, nach rechts - hängt davon ab, welche Gruppe von Statorsegmenten 14 aufgrund des Ausfalls einer der Teileinheiten 4a, 4b nicht mehr mit Strom versorgt wird.

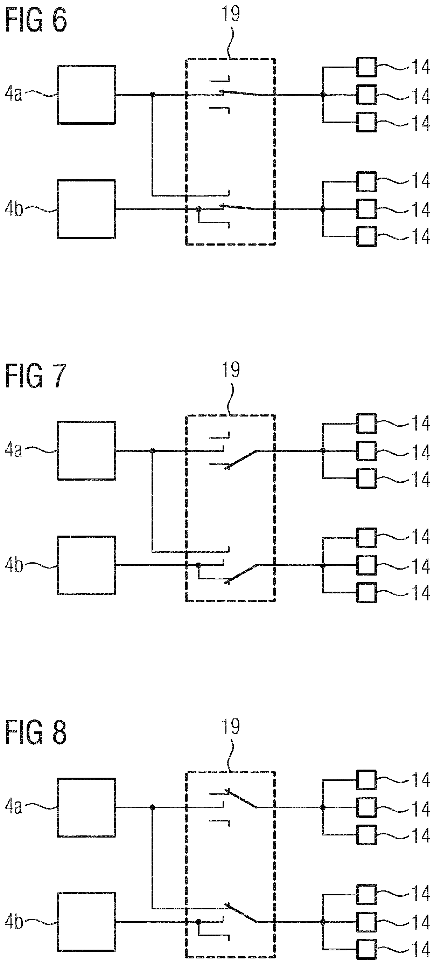

Vorzugsweise werden bei Ausfall einer der Teileinheiten 4a, 4b die Teileinheiten 4a, 4b daher derart an die Gruppen von Statorsegmenten 14 angeschaltet, dass die Richtung der genannten Kraft so weit wie möglich der Gewichtskraft, die der Rotor 8 auf seine Lagerung ausübt, entgegen gerichtet ist. Zu diesem Zweck kann die Umrichtereinheit 4 entsprechend der Darstellung in FIG 6 eine Schalteinrichtung 19 aufweisen. Die Schalteinrichtung 19 ist zwischen den Teileinheiten 4a, 4b und den Spulen 12 der Drehstrommaschine 3 angeordnet, insbesondere - sofern die Teil-Ringleitungen 17 vorhanden sind - zwischen den Teileinheiten 4a, 4b und den Teil-Ringleitungen 17. Die Schalteinrichtung 19 kann als Schütz oder andere elektromechanisch arbeitende Schalteinrichtung ausgebildet sein. Über die Schalteinrichtung 19 kann eingestellt werden, welche der Teileinheiten 4a, 4b der Umrichtereinheit mit den Spulen 12 von welchen Gruppen von Statorsegmenten 14 verbunden ist. Im Normalbetrieb der Kombination 2, wenn also alle Teileinheiten 4a, 4b der Umrichtereinheit 4 ordnungsgemäß arbeiten, ist entsprechend der Darstellung in FIG 6 jede Teileinheit 4a, 4b mit je einer Gruppe von Statorsegmenten 14 verbunden.

Nachfolgend wird angenommen, dass die Spulen 12 der Statorsegmente 14, die im Normalbetrieb an die Teileinheit 4a angeschlossen sind, auf den Rotor 8 eine Kraft ausüben, welche die gleiche Richtung wie die Gewichtskraft des Rotors 8 aufweist. In diesem Fall üben die Spulen 12 der Statorsegmente 14, die im Normalbetrieb an die Teileinheit 4b angeschlossen sind, auf den Rotor 8 eine Kraft aus, welche entgegengesetzt zur Gewichtskraft des Rotors 8 gerichtet ist. Bei Ausfall einer der Teileinheiten 4a, 4b sollten daher die Spulen 12 der Statorsegmente 14, die im Normalbetrieb an die Teileinheit 4a angeschlossen sind, von der Umrichtereinheit 4 getrennt werden und die Spulen 12 der Statorsegmente 14, die im Normalbetrieb an die Teileinheit 4b angeschlossen sind, mit der Umrichtereinheit 4 verbunden bleiben.

Wenn daher die Teileinheit 4a ausfällt, bleiben entsprechend der Darstellung in FIG 7 die Spulen 12 der Statorsegmente 14, die im Normalbetrieb an die Teileinheit 4b angeschlossen sind, weiterhin mit der Teileinheit 4b verbunden. Die Spulen 12 der Statorsegmente 14, die im Normalbetrieb an die Teileinheit 4a angeschlossen sind, können nach Bedarf von der defekten Teileinheit 4a getrennt werden oder mit der defekten Teileinheit 4a verbunden bleiben. Wenn hingegen die Teileinheit 4b ausfällt, werden entsprechend der Darstellung in FIG 8 die Spulen 12 der Statorsegmente 14, die im Normalbetrieb an die Teileinheit 4a angeschlossen sind, von der - nach wie vor funktionsfähigen - Teileinheit 4a getrennt. Hingegen werden entsprechend der Darstellung in FIG 8 die Spulen 12 der Statorsegmente 14, die im Normalbetrieb an die Teileinheit 4b angeschlossen sind, von der Teileinheit 4b getrennt und mit der Teileinheit 4a verbunden.

Die obenstehend erläuterte Vorgehensweise kann nach Bedarf auf mehr als zwei Teileinheiten 4a, 4b erweitert werden. Der Schaltungsaufwand steigt zwar an, das Prinzip bleibt aber dasselbe.

Durch die erläuterte Vorgehensweise wird erreicht, dass bei Ausfall einer der Teileinheiten 4a, 4b die Kraft, die auf den Rotor 8 wirkt und durch das unsymmetrische Zusammenwirken des Stators 11 mit dem Rotor 8 hervorgerufen wird, stets so weit wie möglich der Gewichtskraft des Rotors 8 entgegen gerichtet ist.

Je nach Ausführung der dynamoelektrischen Maschine(Drehstrommaschine) 3 als Innenläufer oder als Außenläufer werden die Teileinheiten 4a, 4b um den Stator 11 und/oder in axialer Verlängerung des Stators 11 und/oder im Stator 11 angeordnet. Diese Positionierung hängt von den Örtlichkeiten und der Ausführung der dynamoelektrischen Maschine(Drehstrommaschine) 3, insbesondere des Generators, ab.

Zusammengefasst betrifft die vorliegende Erfindung somit folgenden Sachverhalt:
Eine Drehstrommaschine 3 weist einen Stator 11 und einen um eine Rotationsachse 10 rotierbaren Rotor 8 auf. Der Stator 11 ist mechanisch in Statorsegmente 14 aufgeteilt, die, bezogen auf die Rotationsachse 10, jeweils einen jeweiligen Sektor überdecken. In den Statorsegmenten 14 sind jeweils die Spulen 12 nur eines einzelnen mehrphasigen Drehstromsystems angeordnet. Die Statorsegmente 14 weisen jeweils auch nur die Anschlüsse 15 zum Anschließen der Phasenleitungen 16 eines einzelnen mehrphasigen Drehstromsystems auf. Die Anschlüsse 15 sind mit den Spulen 12 verbunden. Die Umrichtereinheit 4 weist mehrere unabhängig voneinander betreibbare Teileinheiten 4a, 4b auf, die jeweils ein einzelnes mehrphasiges Drehstromsystem bilden. Die Anzahlen an Phasen der Teileinheiten 4a, 4b und der Statorsegmente 14 stimmen überein. Die Anschlüsse 15 der Statorsegmente 14 sind jeweils mit einer Teileinheit 4a, 4b verbunden. Die Statorsegmente 14 bilden Gruppen von um die Rotationsachse 10 gesehen unmittelbar aufeinander folgenden Statorsegmenten 14. Die Anschlüsse 15 der Statorsegmente 14 sind innerhalb der jeweiligen Gruppe mit derselben Teileinheit 4a, 4b verbunden, von Gruppe von Statorsegmenten 14 zu Gruppe von Statorsegmenten 14 jedoch mit verschiedenen Teileinheiten 4a, 4b verbunden.

Die vorliegende Erfindung wurde obenstehend in Verbindung mit einer Kombination 2 einer Drehstrommaschine 3 und einer Umrichtereinheit 4 erläutert, wobei die Kombination 2 bei einer Windkraftanlage eingesetzt wird. Die Kombination 2 ist jedoch auch in anderen Ausgestaltungen anwendbar, beispielsweise bei einem elektrischen Antrieb oder einem andersartigen Generator.

Die vorliegende Erfindung weist viele Vorteile auf. Die erfindungsgemäßen Ausgestaltungen sind sowohl technisch als auch ökonomisch günstig. Weiterhin können gegenüber Drehstrommaschinen 3 des Standes der Technik, bei denen mindestens sechs vollständig umlaufende Ringleitungen benötigt werden, die Ringleitungen durch die Teil-Ringleitungen 17 ersetzt werden, so dass die für die Ringleitungen benötigte zusätzliche axiale Baulänge der Drehstrommaschine 3 halbiert werden kann. Auch der Fertigungsaufwand kann reduziert werden. Zahlreiche Verbindungen müssen nicht mehr gelötet werden, sondern können - beispielsweise über Kabelschuhe - in Schraubverbindungen überführt werden Der Schaltungsaufwand zum Verbinden der Anschlüsse 15 mit den Teileinheiten 4a, 4b kann verringert werden. Wirbelstromverluste in den Magneten oder im Rotorjoch, die bei Ausfall einer der Teileinheiten 4a, 4b im Rotor 8 der Drehstrommaschine 3 auftreten, können gering gehalten werden. Die Betriebseigenschaften im Falle des Ausfalls einer der Teileinheiten 4a, 4b werden optimiert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Kombination einer elektrischen Drehstrommaschine (3) mit einer Umrichtereinheit (4),
- wobei die Drehstrommaschine (3) einen Stator (11) und einen Rotor (8) aufweist,
- wobei der Rotor (8) um eine Rotationsachse (10) rotierbar ist,
- wobei der Stator (11) mechanisch in eine Anzahl von Statorsegmenten (14) aufgeteilt ist, die, bezogen auf die Rotationsachse (10), jeweils einen jeweiligen Sektor überdecken,
- wobei in den Statorsegmenten (14) jeweils die Spulen (12) nur eines einzelnen mehrphasigen Drehstromsystems angeordnet sind,
- wobei die Statorsegmente (14) jeweils auch nur die Anschlüsse (15) zum Anschließen der Phasenleitungen (16) eines einzelnen mehrphasigen Drehstromsystems aufweisen und
- wobei die Anschlüsse (15) mit den Spulen (12) der Phasen verbunden sind,
- wobei die Umrichtereinheit (4) mehrere Teileinheiten (4a, 4b) aufweist,
- wobei die Teileinheiten (4a, 4b) unabhängig voneinander betreibbar sind und jeweils ein einzelnes mehrphasiges Drehstromsystem bilden,
- wobei die Anzahl an Phasen der Teileinheiten (4a, 4b) mit der Anzahl an Phasen der Statorsegmente (14) übereinstimmt und
- wobei die Anschlüsse (15) der Statorsegmente (14) der Drehstrommaschine (3) jeweils mit einer der Teileinheiten (4a, 4b) verbunden sind,
**dadurch gekennzeichnet,**
- **dass** die Statorsegmente (14) Gruppen von um die Rotationsachse (10) gesehen unmittelbar aufeinander folgenden Statorsegmenten (14) bilden,
- **dass** die Anschlüsse (15) der Statorsegmente (14) innerhalb der jeweiligen Gruppe mit derselben Teileinheit (4a, 4b) der Umrichtereinheit (4) verbunden sind und
- **dass** die Anschlüsse (15) der Statorsegmente (14) von um die Rotationsachse (10) gesehen aufeinanderfolgenden Gruppen von Statorsegmenten (14) mit voneinander verschiedenen Teileinheiten (4a, 4b) der Umrichtereinheit (4) verbunden sind.

2. Kombination nach Anspruch 1, **dadurch gekennzeichnet,**
- **dass** die Anschlüsse (15) des jeweiligen Statorsegments (14) jeweils mit mehreren auf dem jeweiligen Statorsegment (14) angeordneten Gruppen von um die Rotationsachse (10) gesehen unmittelbar aufeinanderfolgenden Spulen (12) verbunden sind und
- **dass** zwischen je zwei Gruppen von um die Rotationsachse (10) gesehen unmittelbar aufeinanderfolgenden Spulen (12) einer der Phasen je eine Gruppe von um die Rotationsachse (10) gesehen unmittelbar aufeinanderfolgenden Spulen (12) je einer der anderen Phasen angeordnet ist.

3. Kombination nach Anspruch 2, **dadurch gekennzeichnet, dass** die Anzahl an Spulen (12) pro Spulengruppe (12) eins beträgt oder größer als eins ist.

4. Kombination nach Anspruch 1, 2 oder 3, **dadurch gekennzeichnet, dass** die Gruppen von Statorsegmenten (14) aus jeweils mehreren Statorsegmenten (14) bestehen.

5. Kombination nach Anspruch 4, **dadurch gekennzeichnet, dass** der Stator (11) Teil-Ringleitungen (17) aufweist, die sich um die Rotationsachse (L) gesehen über einen Teilumfang erstrecken und die jeweils mit den Anschlüssen (15) der Statorsegmente (14) einer einzelnen Gruppe von Statorsegmenten (14) verbunden sind.

6. Kombination nach Anspruch 5, **dadurch gekennzeichnet, dass** die Teil-Ringleitungen (17) pro Phase je einen weiteren Anschluss (18) zum Anschalten der jeweiligen Teil-Ringleitung (17) an eine der Teileinheiten (4a,4b) der Umrichtereinheit (4) aufweisen.

7. Kombination nach Anspruch 4, 5 oder 6, **dadurch gekennzeichnet , dass** die Gruppen von Statorsegmenten (14) sich jeweils über 360°/n erstrecken, wobei n gleich der Anzahl an mit den Spulen (12) der Drehstrommaschine (3) verbundenen Teileinheiten ist oder ein ganzzahliges Vielfaches der Anzahl an Teileinheiten (4a,4b) ist.

8. Kombination nach Anspruch 7, **dadurch gekennzeichnet, dass** die Anzahl an Gruppen von Statorsegmenten (14) gleich der Anzahl an mit den Spulen (12) der Drehstrommaschine (3) verbundenen Teileinheiten (4a,4b) der Umrichtereinheit (4) ist.

9. Kombination nach Anspruch 8, **dadurch gekennzeichnet, dass** die Umrichtereinheit (4) eine zwischen den Teileinheiten (4a,4b) und den Spulen (12) der Drehstrommaschine (3) angeordnete Schalteinrichtung (19) aufweist, über welche einstellbar ist, welche der Teileinheiten (4a,4b) der Umrichtereinheit (4) mit den Spulen (12) von welchen Gruppen von Statorsegmenten (14) verbunden ist.

10. Kombination nach Anspruch 7, **dadurch gekennzeichnet, dass** die Anzahl an Gruppen von Statorsegmenten (14) gleich dem Doppelten der Anzahl an mit den Spulen (12) der Drehstrommaschine (3) verbundenen Teileinheiten (4a,4b) der Umrichtereinheit (4) ist und dass die Spulen (12) der Statorsegmente (14) der Gruppen von Statorsegmenten (14), die jeweils mit der gleichen Teileinheit (4a, 4b) der Umrichtereinheit (4) verbunden sind, einander bezüglich der Rotationsachse (10) gegenüber liegen.

11. Kombination nach einem der obigen Ansprüche, **dadurch gekennzeichnet, dass** der Rotor (8) als Außenläufer ausgebildet ist.

12. Kombination nach einem der obigen Ansprüche, **dadurch gekennzeichnet, dass** die Anzahl an Phasen drei beträgt.

13. Windkraftanlage,
- wobei die Windkraftanlage eine Windturbine (5) und eine Kombination (2) nach einem der obigen Ansprüche aufweist,
- wobei die Windturbine (5) den Rotor (8) der elektrischen Drehstrommaschine (3) der Kombination (2) antreibt.
